# EUROPEAN PATENT APPLICATION

(11) **EP 4 753 339 A1**
(43) Date of publication of application: **03.06.2026**
(21) Application number: 23946240.1
(22) Date of filing: 26.07.2023
(51) Int. Cl.: H04W 52/02

(54) **INFORMATION INDICATION METHOD, TERMINAL, NETWORK DEVICE, COMMUNICATION SYSTEM, AND STORAGE MEDIUM**

(71) Applicant: Beijing Xiaomi Mobile Software Co., Ltd., Beijing 100085 (CN)
(72) Inventor: FU, Ting, Beijing 100085 (CN); LI, Yanhua, Beijing 100085 (CN)
(74) Representative: Gunzelmann, Rainer
(86) International application number: PCT/CN2023/109444
(87) International publication number: WO 2025/020153

(57) **Abstract**

Embodiments of the present disclosure provide an information indication method, a terminal, a network device, a communication system, and a storage medium. The method comprises: when a first transceiver of a terminal is in a sleep state, determining whether to transmit a channel state information (CSI) report, wherein the terminal comprises the first transceiver and a second transceiver, and the power consumption of the first transceiver in a working state is greater than the power consumption of the second transceiver in a working state. The technical solution provided in the embodiments of the present disclosure facilitates reduction of wake-up frequency of the first transceiver without the need to transmit a CSI report, reducing unnecessary CSI report sending; thus, the terminal is more power-saving, and the battery life of the terminal is prolonged.

## Description

### TECHNICAL FIELD

The disclosure relates to the field of wireless communication technologies, in particular to an information indication method, a terminal, a network device, a communication system and a storage medium.

### BACKGROUND

A low power wake up mechanism is introduced to reduce power consumption of a terminal for use in a wireless communication network. The terminal employs an independent low power (LP) wake up radio (WUR) to receive a LP wake up signal (WUS) from the network. The LP WUS is used to activate a master receiver for data transmission and reception. When no LP WUS is detected, the master receiver remains in a sleep state, to reduce the power consumption of the terminal.

### SUMMARY

The terminal frequently wakes up its master transceiver to report a channel state information (CSI), resulting in high power consumption and reduced battery life.

The embodiments of the disclosure provide an information indication method, a terminal, a network device, a communication system and a storage medium.

In a first aspect, the embodiments of the disclosure provide an information indication method. The method includes:
in response to a first transceiver of a terminal being in a sleep state, determining whether to transmit a CSI report, in which the terminal includes the first transceiver and a second transceiver, and a power consumption of the first transceiver in a working state is greater than a power consumption of the second transceiver in a working state.

In a second aspect, the embodiments of the disclosure provide an information indication method. The method includes:
transmitting by a network device first information to a terminal, in which the first information is used for the terminal to determine whether to transmit a CSI report in response to a first transceiver being in a sleep state, the terminal includes the first transceiver and a second transceiver, and a power consumption of the first transceiver in a working state is greater than a power consumption of the second transceiver in a working state.

In a third aspect, the embodiments of the disclosure provide an information indication method. The method includes:
transmitting by a network device first information to a terminal, in which the first information is used for the terminal to determine whether to transmit a CSI report in response to a first transceiver being in a sleep state; and
in response to the first transceiver of the terminal being in a sleep state, determining whether to transmit the CSI report, in which the terminal includes the first transceiver and a second transceiver, and a power consumption of the first transceiver in a working state is greater than a power consumption of the second transceiver in a working state.

In a fourth aspect, the embodiments of the disclosure provide a terminal. The terminal includes:
a determining module, configured to, in response to a first transceiver of a terminal being in a sleep state, determine whether to transmit a CSI report, in which the terminal includes the first transceiver and a second transceiver, and a power consumption of the first transceiver in a working state is greater than a power consumption of the second transceiver in a working state.

In a fifth aspect, the embodiments of the disclosure provide a network device. The network device includes:
a transceiver module, configured to transmit first information to a terminal, in which the first information is used for the terminal to determine whether to transmit a CSI report in response to a first transceiver being in a sleep state, the terminal includes the first transceiver and a second transceiver, and a power consumption of the first transceiver in a working state is greater than a power consumption of the second transceiver in a working state.

In a sixth aspect, the embodiments of the disclosure provide a communication system. The communication system includes a terminal and a network device. The terminal is configured to implement the information indication method provided by the first aspect, and the network device is configured to implement the information indication method provided by the second aspect.

In a seventh aspect, the embodiments of the disclosure provide a communication device. The communication device includes:
one or more processors;
in which the one or more processors are used for calling instructions to cause the communication device to implement the information indication method provided by the first aspect or the information indication method provided by the second aspect.

In an eighth aspect, the embodiments of the disclosure provide a storage medium. The storage medium stores instructions, and when the instructions are executed by a communication device, the communication device is caused to implement the information indication method provided by the first aspect or the information indication method provided by the second aspect.

The technical solution provided by the embodiments of the disclosure facilitates reducing frequent wake-ups of the first transceiver and minimizing unnecessary transmissions of CSI report without requiring CSI reporting. This enhances terminal power efficiency and extends battery life.

It should be understood that both the above general descriptions and the following detailed descriptions are exemplary and explanatory only, and do not limit the embodiments of the disclosure.

### BRIEF DESCRIPTION OF THE DRAWINGS

The accompanying drawings, which are incorporated in and constitute a part of the specification, illustrate embodiments consistent with the disclosure and together with the specification, serve to explain the principles of the embodiments of the disclosure.
FIG. 1 is a schematic structural diagram of a communication system illustrated based on an example embodiment.
FIG. 2a is a schematic flowchart of an information indication method illustrated based on an example embodiment.
FIG. 2b is a schematic flowchart of an information indication method illustrated based on an example embodiment.
FIG. 3a is a schematic flowchart of an information indication method illustrated based on an example embodiment.
FIG. 3b is a schematic flowchart of an information indication method illustrated based on an example embodiment.
FIG. 3c is a schematic flowchart of an information indication method illustrated based on an example embodiment.
FIG. 4a is a schematic flowchart of an information indication method illustrated based on an example embodiment.
FIG. 4b is a schematic flowchart of an information indication method illustrated based on an example embodiment.
FIG. 4c is a schematic flowchart of an information indication method illustrated based on an example embodiment.
FIG. 5 is a schematic flowchart of an information indication method illustrated based on an example embodiment.
FIG. 6a is a schematic structural diagram of a terminal illustrated based on an example embodiment.
FIG. 6b is a schematic structural diagram of a network device illustrated based on an example embodiment.
FIG. 7a is a schematic structural diagram of a user equipment (UE) illustrated based on an example embodiment.
FIG. 7b is a schematic structural diagram of a communication device illustrated based on an example embodiment.

### DETAILED DESCRIPTION

The embodiments of the disclosure provide an information indication method, a terminal, a network device, a communication system and a storage medium.

In a first aspect, the embodiments of the disclosure provide an information indication method. The method includes:
in response to a first transceiver of a terminal being in a sleep state, determining whether to transmit a CSI report, in which the terminal includes the first transceiver and a second transceiver, and a power consumption of the first transceiver in a working state is greater than a power consumption of the second transceiver in a working state.

In the above embodiments, the terminal may determine whether the CSI report needs to be transmitted when the first transceiver is in the sleep state. This facilitates reducing frequent wake-ups of the first transceiver and minimizing unnecessary transmissions of CSI report without requiring CSI reporting. This enhances terminal power efficiency and extends battery life.

In combination with some embodiments of the first aspect, in some embodiments, determining whether to transmit the CSI report includes at least one of:
determining whether to transmit the CSI report based on a protocol; or
determining whether to transmit the CSI report based on first information transmitted by a network device.

In the above embodiments, the terminal may decide whether to transmit the CSI report by itself based on the protocol or based on the first information transmitted by the network device, thus making the operation related to transmitting the CSI report by the terminal more flexible.

In combination with some embodiments of the first aspect, in some embodiments, the first information indicates at least one of:
a first indication, indicating whether the terminal transmits a first CSI report, in which the first CSI report includes: beam measurement information;
a second indication, indicating whether the terminal transmits a second CSI report, in which the second CSI report is different from a first CSI report; or
a third indication, indicating transmission parameters of a first CSI report and/or a second CSI report.

In the above embodiments, the first information is used to indicate the first indication, the second indication and/or the third indication, so that the terminal may determine a metric reported in the CSI report and/or the transmission parameters based on the first information transmitted by the network device, so as to reduce unnecessary CSI report transmissions and improve the flexibility of transmitting the CSI report, thereby reducing the energy consumption of the terminal.

In combination with some embodiments of the first aspect, in some embodiments, the beam measurement information includes at least one of:
Layer (L)1-reference signal receiving power (RSRP);
L1-reference signal receiving quality (RSRQ); or
L1-signal to interference-plus-noise ratio (SINR).

In the above embodiments, the terminal may carry the L1-RSRP, the L1-RSRQ and/or the L1-SINR in the first CSI report, so that the network device may determine a communication quality of a service beam of the terminal based on the first CSI report transmitted by the terminal.

In combination with some embodiments of the first aspect, in some embodiments, the method further includes:
receiving second information transmitted by a network device;
the second information indicating at least one of:
whether the first transceiver enters the sleep state; or
whether the second transceiver enters the working state.

In the above embodiments, the terminal may determine whether the first transceiver is in the sleep state or whether to use the second transceiver for monitoring based on the second information transmitted by the network device. Therefore, under the condition that downlink data transmission is not required by the network device, the network device may indicate the terminal to enable the first transceiver to enter the sleep state or use the LP second transceiver for monitoring in a timely manner using the second information, so as to reduce the energy consumption of the terminal.

In combination with some embodiments of the first aspect, in some embodiments, the second information and the first information are carried in a same message.

In the above embodiments, the first information and the second information are carried in the same message. Using the message, the network device may indicate the terminal to enable the first transceiver to enter the sleep state or use the second transceiver for monitoring while indicating whether the terminal needs to transmit the CSI report when the first transceiver is in the sleep state, thereby saving transmission resources.

In combination with some embodiments of the first aspect, in some embodiments, the message includes at least one of:
a media access control (MAC) control element (CE); or
downlink control information (DCI).

In the above embodiments, the network device directly reuses the existing MAC CE and/or DCI to transmit the first information and the second information, thus saving transmission resources and reducing signaling overhead.

In combination with some embodiments of the first aspect, in some embodiments, the first information is carried in a WUS associated with the second transceiver.

In the above embodiments, the network device directly reuses the WUS associated with the second transceiver to carry the first information. On the one hand, the network device directly reuses the existing signaling to transmit the first information to the terminal, thus reducing signaling overhead. On the other hand, the network device uses a WUS of a physical layer to carry the first information, so that the terminal may quickly decode and obtain the first information, thereby improving a processing efficiency.

In combination with some embodiments of the first aspect, in some embodiments, the first information is used to activate or deactivate transmitting the CSI report by the terminal.

In the above embodiments, when the first transceiver of the terminal is in the sleep state, the network device may transmit a reference signal containing the first information to the terminal, so as to flexibly adjust the transmission operation of the CSI report of the terminal when the first transceiver is in the sleep state.

In combination with some embodiments of the first aspect, in some embodiments, across different sleep periods of the first transceiver of the terminal, operations related to transmitting the CSI report are performed independently between each other.

In the above embodiments, the operations related to the transmission of the CSI report of the terminal during different sleep periods of the first transceiver are independent of each other, so that whether to transmit the CSI report and/or a transmission time period for the CSI report may be flexibly determined depending on different communication conditions.

In combination with some embodiments of the first aspect, in some embodiments, the method further includes:
determining by the terminal a transmission time period for the CSI report.

In the above embodiments, when the terminal needs to transmit the CSI report while the first transceiver is in the sleep state, the terminal may determine the transmission time period for the CSI report, and then transmit the CSI report in the transmission time period, which reduces unnecessary wake-ups of the first transceiver and facilitates the network device to configure transmission resources for the terminal.

In combination with some embodiments of the first aspect, in some embodiments, determining, by the terminal, the transmission time period for the CSI report includes:
determining the transmission time period for the CSI report based on a protocol;
   or,
determining the transmission time period for the CSI report based on a network configuration.

In the above embodiments, the terminal may determine the transmission time period for the CSI report by itself based on the protocol or based on the network configuration, thus making the configuration of the transmission time period for the CSI report more flexible.

In combination with some embodiments of the first aspect, in some embodiments, the transmission time period for the CSI report includes at least one of:
an on-duration period within a connected discontinuous reception DRX (C-DRX) cycle configured by the terminal;
a time period after a first duration following the second transceiver of the terminal entering the working state; or
a time period after a second duration following the first transceiver of the terminal entering the sleep state.

In the above embodiments, when the terminal is configured with C-DRX, the CSI report is transmitted in the DRX on duration within the C-DRX cycle, so as to reduce the frequency of wake-ups of the first transceiver in the sleep state in the C-DRX cycle and reduce the energy consumption of the terminal. Or, the CSI report is transmitted after the first duration after the second transceiver enters the working state. Or, the CSI report is transmitted after the second duration after the first transceiver enters the sleep state. Therefore, the terminal does not need to transmit the CSI report at the initial stage when the terminal just uses the second transceiver for monitoring, i.e., at the stage where the CSI report is not required, thus reducing the energy consumption of the terminal.

In a second aspect, the embodiments of the disclosure provide an information indication method. The method includes:
transmitting by a network device first information to a terminal, in which the first information is used for the terminal to determine whether to transmit a CSI report in response to a first transceiver being in a sleep state, the terminal includes the first transceiver and a second transceiver, and a power consumption of the first transceiver in a working state is greater than a power consumption of the second transceiver in a working state.

In the above embodiments, the network device transmits the first information to the terminal to indicate whether the terminal needs to transmit the CSI report when the first transceiver is in the sleep state. This facilitates reducing frequent wake-ups of the first transceiver and minimizing unnecessary transmissions of CSI report without requiring CSI reporting. This enhances terminal power efficiency and extends battery life.

In a third aspect, the embodiments of the disclosure provide an information indication method. The method includes:
transmitting by a network device first information to a terminal, in which the first information is used for the terminal to determine whether to transmit a CSI report in response to a first transceiver being in a sleep state; and
in response to the first transceiver of the terminal being in a sleep state, determining whether to transmit the CSI report, in which the terminal includes the first transceiver and a second transceiver, and a power consumption of the first transceiver in a working state is greater than a power consumption of the second transceiver in a working state.

In a fourth aspect, the embodiments of the disclosure provide a terminal. The terminal includes:
a determining module, configured to, in response to a first transceiver of a terminal being in a sleep state, determine whether to transmit a CSI report, in which the terminal includes the first transceiver and a second transceiver, and a power consumption of the first transceiver in a working state is greater than a power consumption of the second transceiver in a working state.

In a fifth aspect, the embodiments of the disclosure provide a network device. The network device includes:
a transceiver module, configured to transmit first information to a terminal, in which the first information is used for the terminal to determine whether to transmit a CSI report when a first transceiver is in a sleep state, the terminal includes the first transceiver and a second transceiver, and a power consumption of the first transceiver in a working state is greater than a power consumption of the second transceiver in a working state.

In a sixth aspect, the embodiments of the disclosure provide a communication system. The communication system includes a terminal and a network device. The terminal is configured to implement the information indication method provided by the first aspect, and the network device is configured to implement the information indication method provided by the second aspect.

In a seventh aspect, the embodiments of the disclosure provide a communication device. The communication device includes:
one or more processors;
in which the one or more processors are configured to call instructions to cause the communication device to implement the information indication method of the first aspect or the information indication method of the second aspect.

In an eighth aspect, the embodiments of the disclosure provide a storage medium. The storage medium stores instructions, and when the instructions are executed by a communication device, the communication device is caused to implement the information indication method described in the optional implementations of the first aspect or the information indication method described in the optional implementations of the second aspect.

In a ninth aspect, the embodiments of the disclosure provide a program product. When the program product is executed by a communication device, the communication device is caused to implement the information indication method described in the optional implementations of the first aspect or the information indication method described in the optional implementations of the second aspect.

In a tenth aspect, the embodiments of the disclosure provide a computer program. When the computer program is executed by a computer, the computer is caused to implement the information indication method described in the optional implementations of the first aspect or the information indication method described in the optional implementations of the second aspect.

It is understood that the terminal, the network device, the communication device, the communication system, the storage medium, the program product and the computer program. are all used for implementing the methods provided by the embodiments of the disclosure. The beneficial effects they achieve can refer to the beneficial effects in the corresponding methods, which will not be repeated here.

The embodiments of the disclosure provide an information indication method, a terminal, a network device, a communication system and a storage medium. In some embodiments, terms such as "information indication method", "information processing method" and "information transmission method" are interchangeable. Terms such as "information indication apparatus", "information processing apparatus" and "information transmission apparatus" are interchangeable. Moreover, terms such as "communication system" and "information processing system" are interchangeable.

Not all of the embodiments of the disclosure are provided below, only some embodiments are illustrated in the following as examples and they are not taken as specific limitations on the protection scope of the disclosure. Without contradiction, in an embodiment, each step may be implemented as an independent embodiment, and steps may be combined arbitrarily. For example, the solution after removing some steps in the embodiment may also be implemented as an independent embodiment. The steps in the embodiment may be performed in different orders, and optional implementations in the embodiment may be combined arbitrarily. In addition, the embodiments of the disclosure may also be combined arbitrarily. For example, some or all of the steps of different embodiments may be combined arbitrarily, and each embodiment may be arbitrarily combined with optional implementations of other embodiments.

In the embodiments of the disclosure, unless there are special explanations and logical conflicts, terms and/or descriptions of the embodiments are consistent and can refer to each other, and technical features in different embodiments may be combined as a new embodiment according to their inherent logical relations.

Terms used in the embodiments of the disclosure are only for the purpose of describing specific embodiments, and are not considered as limitations of the disclosure.

In the embodiments of the disclosure, unless otherwise specified, an element expressed in a singular form through "a", "an", "the" "the above", "said", "the above described" or "this", is interpreted as that there is "one and only one", "one or more" or "at least one" of the element. For example, when an article, e.g., "a", "an" or "the" in English, is used in translation, a noun after the article can be interpreted in a singular form or in a plural form.

In the embodiments of the disclosure, "a plurality of" refers to "two or more".

In some embodiments, the terms "at least one of", "one or more", "a plurality of" and "multiple" are interchangeable.

In some embodiments, "at least one of A or B", "A and/or B", "in one case A, while in another case B", and "in response to one case A, while in response to another case B" may be used in the following technical solutions depending on the specific condition: in some embodiments, A is executed independent of B; in some embodiments, B is executed independent of A; in some embodiments, A and B are selectively executed; and in some embodiments, A and B are both executed. The same applies when there are more branches such as A, B and C.

In some embodiments, "A or B" may be used in the following technical solutions depending on the condition: in some embodiments, A is executed independent of B; in some embodiments, B is executed independent of A; and in some embodiments, A and B are selectively executed. The same applies when there are more branches such as A, B and C.

The prefixes such as "first" and "second" in the embodiments of the disclosure are used only to distinguish different objects, and the prefix is not intended to limit the position, order, priority, quantity or content of a certain object. The description of the object can refer to the descriptions of the claims or the embodiments, and should not constitute unnecessary limitations because of the use of prefix. For example, when describing a "field", the prefixes "first" and "second" in "first field" and "second field" do not indicate the positions or orders of the two fields or whether the "first field" and "second field" are in the same message or not, nor do they define the sequence of the "first field" and "second field". For another example, when describing a "level", the prefixes "first" and "second" in "first level" and "second level" do not limit the priorities of the levels. Moreover, an ordinal number used to describe an object does not indicate a quantity of the object, and there may be one or more of such object. Taking "first device" as an example, there may be one or more "first devices". In addition, objects with different prefixes may refer to the same object or different objects. For example, when describing a "device", "first device" and "second device" may refer to the same device or different devices, or may refer to the same device type or different device types. When describing "information", "first information" and "second information" may refer to the same information or different information, or may refer to the same content or different contents.

In some embodiments, "comprising A", "containing A", "used to indicate A" and "carrying A" may be interpreted as "directly carrying A" or "indirectly indicating A".

In some embodiments, terms "in response to", "in response to determining", "in the case of", "when", "while", "if" and "assuming that" are interchangeable.

In some embodiments, terms "greater than", "greater than or equal to", "more than" "more than or equal to", "higher than", "higher than or equal to", "no less than", "no lower than" and "above" are interchangeable. Moreover, the terms "less than", "less than or equal to", "lower than", "lower than or equal to", "smaller than", "smaller than or equal to", "no greater than", "no higher than" and "below" are interchangeable.

In some embodiments, the apparatus may be interpreted as physical or virtual, and its name is not limited to those listed in the embodiments. Terms "apparatus", "equipment", "device", "circuit", "network element", "node", "function", "unit", "section", "system", "network", "chip", "chip system", "entity" and "body" are interchangeable.

In some embodiments, "network" may be interpreted as a device included in the network, such as an access network device and a core network device.

In some embodiments, terms "access network (AN) device", "radio AN (RAN) device", "base station (BS)", "radio BS", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier" and "bandwidth part (BWP)" are interchangeable.

In some embodiments, terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client" and "client" are interchangeable.

In some embodiments, "AN device", "core network device" or "network device" may be replaced by "terminal". For example, the embodiments of the disclosure are applied to a structure in which communications between the AN device/core network device/network device and the terminal are replaced by communications between terminals, such as device-to-device (D2D) communications and vehicle-to-everything (V2X) communications. In this case, the terminal may have all or part of the functions of the AN device. In addition, terms such as "uplink" and "downlink" may also be replaced by terms corresponding to communications between terminals, such as "side". For example, "uplink channel" and "downlink channel" may be replaced by "side channel", and "uplink" and "downlink" may be replaced by "side link".

In some embodiments, when "terminal" is replaced by "AN device", "core network device" or "network device", the AN device, the core network device or the network device may have all or part of the functions of the terminal.

In some embodiments, data and information are obtained by means comply with the laws and regulations of the host country.

In some embodiments, data and information are obtained with the consent of users.

In addition, each element, row or column in the tables of the embodiments of the disclosure may be implemented as an independent embodiment, or any combination of elements, rows and columns may be implemented as an independent embodiment.

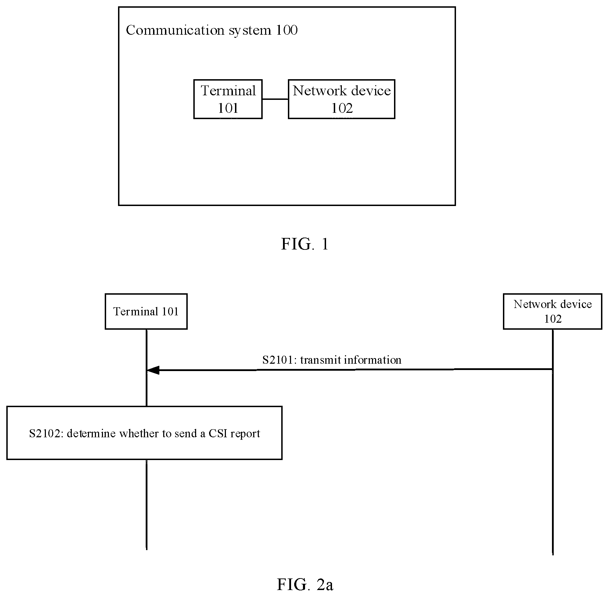

FIG. 1 is a schematic structural diagram of a communication system illustrated according to an embodiment of the disclosure.

As illustrated in FIG. 1, the communication system 100 includes a terminal 101 and a network device 102.

In some embodiments, the terminal 101 includes at least one of: a mobile phone, a wearable device, an Internet of Things (IoT) device, a car with communication functions, a smart car, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city or a wireless terminal in smart home, which is not limited thereto.

In some embodiments, the network device 102 includes an AN device and/or a core network device.

In some embodiments, the AN device may be a node or a device that connects the terminal to a wireless network. The AN device includes at least one of an evolved Node B (eNB) in a 5th generation (5G) mobile communication system, a next generation eNB (ng-eNB), a next generation NodeB (gNB), a NodeB (NB), a home NB (HNB), a home eNB (HeNB), a wireless backhaul equipment, a radio network controller (RNC), a BS controller (BSC), a base transceiver station (BTS), a base band unit (BBU), a mobile switching center, a BS in a 6th generation (6G) mobile communication system, an Open RAN, a Cloud RAN, a BS in other communication systems, or an access node in a wireless fidelity (Wi-Fi) system, which is not limited thereto.

In some embodiments, the technical solution of the disclosure is applied to the Open RAN. In this case, interfaces between AN devices or interfaces within an AN device involved in the embodiments of the disclosure may be used as internal interfaces of the Open RAN. The procedures and information interactions between these internal interfaces are implemented by software or programs.

In some embodiments, the AN device is composed of a central unit (CU) and distributed units (DUs), and "CU" may also be the abbreviation of control unit. The use of CU-DU structure allows to divide a protocol layer of the AN device, such that some functions of the protocol layer are placed in the CU for centralized control, and some or all of the remaining functions of the protocol layer are distributed in the DUs that are centrally controlled by the CU, which is not limited thereto.

In some embodiments, the core network device may be a device, including one or more network elements, or a plurality of devices or groups of devices, each including one or more network elements. The network element may be virtual or physical. The core network includes at least one of an evolved packet core (EPC), a 5G core network (CN) or a next generation core (NGC).

It is understandable that to clearly illustrate the technical solution of the embodiments of the disclosure, its applicable communication system is introduced first in the embodiments of the disclosure, which does not constitute as a limitation on the technical solution provided by the embodiments of the disclosure. Those skilled in the art understand that as system architectures evolve and new business scenarios emerge, the technical solution provided by the embodiments of the disclosure is also applicable to similar technical problems.

The following embodiments of the disclosure are applied to the entire or a portion of the communication system 100 shown in FIG. 1, which is not limited herein. The entities shown in FIG. 1 are examples. The communication system may include all or part of the entities in FIG. 1, and may also include entities not shown in FIG. 1. The quantities and forms of these entities are arbitrary, and the connection relationships between these entities are illustrated as examples. The entities may or may not be connected, and the entities may be connected by any means, e.g., directly or indirectly, or in a wired manner or wirelessly.

The embodiments of the disclosure may be applied to long-term evolution (LTE), LTE-Advanced (LTE-A), LTE-Beyond (LTE-B), SUPER 3G, IMT-Advanced, 4th generation (4G) mobile communication system, 5G, 5G new radio (NR), future radio access (FRA), a new-radio access technology (RAT), NR, new radio access (NX), future generation radio access (FX), global system for mobile communications (GSM (registered trademark)), CDMA2000, ultra mobile broadband (UMB), IEEE 802.11(Wi-Fi (registered trademark)), IEEE 802.16 (WiMAX (registered trademark)), IEEE 802.20, ultra-wideband (UWB), Bluetooth (registered trademark), a public land mobile network (PLMN), a D2D system, a machine-to-machine (M2M) system, an IoT system, a V2X system, systems using other communication methods or their next generation systems. In addition, the above systems may be combined for applications, such as a combination of the LTE/LTE-A system and 5G.

In some embodiments, the sensitivity of LP-WUR is lower than that of the master transceiver. For example, the reception sensitivity of the master transceiver is -110dB, while the reception sensitivity of the LP WUS is -80dB.

In some embodiments, for a terminal in a radio resource control (RRC)-connected state, when a master transceiver of the terminal is in the sleep state, an LP-WUR is working. When the network device wants to wake up the terminal, the network device transmits an LP WUS to the terminal to wake it up. Therefore, the network device can clearly know when the terminal wakes up the master transceiver.

In some embodiments, for the terminal in the RRC-connected state, the master transceiver of the terminal performs CSI measurement and report.

In some embodiments, for the terminal in the RRC-connected state, when the master transceiver is in the sleep state and the LP-WUR is active, frequent CSI reporting serves little purpose since the main transceiver does not schedule data. This practice causes the master transceiver to wake up frequently for CSI reporting, resulting in high terminal power consumption and reduced battery life.

FIG. 2a is an interactive schematic diagram of an information indication method illustrated based on an embodiment of the disclosure. As illustrated in FIG. 2a, the embodiment of the disclosure involves in an information indication method. The method is applied to the communication system 100, and includes the following steps.

At step S2101, the network device transmits information to the terminal.

In some embodiments, the terminal receives the information transmitted by the network device.

In some embodiments, the network device transmits first information to the terminal.

In some embodiments, the network device transmits second information to the terminal.

In some embodiments, the network device transmits the first information and the second information to the terminal.

In some embodiments, the terminal receives the first information and/or the second information transmitted by the network device.

In some embodiments, the terminal includes a first transceiver and a second transceiver.

In some embodiments, a power consumption of the first transceiver in a working state is greater than a power consumption of the second transceiver in a working state.

In some embodiments, an operational capability of the first transceiver is stronger than that of the second transceiver.

In some embodiments, the first transceiver supports transmission and reception. The second transceiver supports downlink reception alone, or supports downlink reception and uplink signal transmission of a physical layer.

In some embodiments, the second transceiver is configured to receive a WUS for waking up the first transceiver in a sleep state.

In some embodiments, the first transceiver may include, but is not limited to, a master transceiver.

In some embodiments, the second transceiver may include, but is not limited to, a LP-WUR.

In some embodiments, a sensitivity of the first transceiver is higher than that of the second transceiver.

In some embodiments, the first information is used for the terminal to determine whether to transmit a CSI report when the first transceiver is in the sleep state.

In some embodiments, the first information is used for the terminal to determine whether to transmit the CSI report when the first transceiver is in a non-working state.

In some embodiments, the first information is used for the terminal to determine whether to transmit the CSI report after the first transceiver exits the working state.

In some embodiments, the first information is used for the terminal to determine whether to transmit the CSI report when the first transceiver is in the sleep state and the second transceiver is in the working state.

In some embodiments, the first information is used to indicate the terminal whether to transmit the CSI report when the first transceiver is in the current sleep state.

It should be noted that the first information currently transmitted by the network device may only indicate the terminal whether to transmit the CSI report when the first transceiver is in the current sleep state. The first information currently transmitted by the network device will not affect the transmission of the CSI report of the terminal during the next sleep stage of the first transceiver.

In some embodiments, across different sleep periods of the first transceiver of the terminal, operations related to transmitting the CSI report are performed independently between each other.

It should be noted that the operations related to transmitting the CSI report are performed independently between each other across different sleep periods of the first transceiver of the terminal, may be understood as follows: for each distinct sleep period of the first transceiver, the terminal may individually determine whether to transmit a CSI report, moreover, across different sleep periods of the first transceiver, the terminal's CSI reporting transmission operations may be identical or distinct.

In some embodiments, when determining whether to transmit the CSI report based on the first information, operations related to transmitting the CSI report are performed independently between each other across different sleep periods of the first transceiver of the terminal.

In some embodiments, the operation of transmitting the CSI report by the terminal during a sleep period of the first transceiver is independent of operation of transmitting the CSI report by the terminal during another sleep period of the first transceiver.

It is understood that during different sleep periods of the first transceiver of the terminal, the operations related to transmitting the CSI report of the terminal are independent between each other.

In some embodiments, the first information is used to indicate a metric reported in the CSI report.

In some embodiments, the first information is used to indicate a metric reported in a CSI report to be reported.

In some embodiments, the first information indicates at least one of:
a first indication, indicating whether the terminal transmits a first CSI report, in which the first CSI report includes: beam measurement information;
a second indication, indicating whether the terminal transmits a second CSI report, in which the second CSI report is different from a first CSI report; or
a third indication, indicating transmission parameters of a first CSI report and/or a second CSI report.

In some embodiments, a metric reported in in a second CSI report may include, but is not limited to, at least one of a channel quality indicator (CQI), a precoding matrix indicator (PMI) or a rank indicator (RI).

It should be noted that the metric reported in in the second CSI report is at least partially different from a metric reported in the first CSI report. For example, the second CSI report does not include the beam measurement information.

In some embodiments, the beam measurement information is used to determine a service beam of the terminal.

It should be noted that in NR technology, communications are performed at a relatively higher frequency band. For example, in a frequency range 2 (FR2), the communication frequency is above 6GHz. Due to the rapid attenuation of high-frequency channels, beam-based transmission and reception are required to ensure coverage.

The terminal may measure a beam(s) of a serving cell and/or a neighbor cell, and transmit beam measurement information to the network device, so that the network device may select an appropriate service beam for the terminal based on the beam measurement information and use the service beam to transmit data with the terminal.

In some embodiments, the beam measurement information includes at least one of:
L1-RSRP;
L1-RSRQ; or
L1-SINR.

In some embodiments, the beam measurement information further includes a beam identifier or a pilot identifier.

In some embodiments, the transmission parameters include, but are not limited to, a transmission frequency, a transmission period and a transmission cycle.

In some embodiments, the first information may be carried in an RRC layer signaling.

It should be noted that the method may be applied to the terminal in the RRC-connected state, and the network device may directly reuse the existing RRC layer signaling to transmit the first information to the terminal, thus reducing signaling overhead.

In some embodiments, the first information may be carried in an RRC connection release message.

It should be noted that after receiving the RRC connection release message, the terminal switches the first transceiver from the working state to the sleep state, and determines whether to transmit the CSI report when the first transceiver is in the sleep state based on the first information in the RRC connection release message.

In some embodiments, the method of the disclosure may be used for the terminal in the RRC-disconnected state.

In some embodiments, the network device transmits the RRC layer signaling containing the first information to the terminal when the first transceiver is in the working state.

It is noted that if the first information is carried in the RRC layer signaling, the terminal may receive the first information before the first transceiver sleeps, and determine whether the terminal needs to transmit the CSI report when the first transceiver is in the sleep state.

In some embodiments, the first information may be carried in a WUS associated with the second transceiver.

In some embodiments, the WUS includes, but is not limited to, a LP WUS.

In some embodiments, the network device transmits a WUS containing the first information to the terminal when the first transceiver is in the sleep state.

It is noted that the first information is carried in the WUS. The terminal may receive the first information when the first transceiver is in the sleep state, and determine whether to transmit the CSI report when the first transceiver is in the sleep state.

In some embodiments, the first information carried by the WUS is used to indicate whether to transmit a periodic CSI report, an aperiodic CSI report or a semi-static CSI report.

In some embodiments, the first information carried by the WUS is used to trigger the terminal to transmit the aperiodic CSI report.

It should be noted that the network device may transmit a reference signal containing the first information to the terminal based on a current communication environment or its own communication requirements, so as to trigger the terminal to transmit the aperiodic CSI report to the network device.

For example, if the transmission cycle of the CSI report configured for the terminal has not reached, the network device may transmit the WUS to the terminal in the case of channel quality changes, so as to trigger the terminal to transmit the aperiodic CSI report. This is convenient for the network device to know the current CSI in time.

In some embodiments, the second information indicates at least one of:
whether the first transceiver enters the sleep state; or
whether the second transceiver enters the working state.

It is understood that the second information may include, but is not limited to, an activation command.

In some embodiments, the first information and the second information may be carried in the same message.

It is understood that the network device may carry the first information and the second information in the same message. By transmitting the message to the terminal, it may indicate whether the first transceiver enters the sleep state and whether the second transceiver enters the working state while indicating whether the terminal needs to transmit the CSI report when the first transceiver is in the sleep state.

In some embodiments, the message includes at least one of:
a MAC CE; or
DCI.

It should be noted that the network device may directly reuse the existing signaling and transmit both the first information and the second information to the terminal. In this way, the network device may indicate whether the first transceiver enters the sleep state and whether the second transceiver enters the working state while indicating whether the terminal needs to transmit the CSI report when the first transceiver is in the sleep state, thus reducing signaling overhead.

At step S2102, The terminal determines whether to transmit the CSI report.

In some embodiments, the terminal determines whether to transmit the CSI report based on a protocol.

In some embodiments, the terminal determines a metric reported in a CSI report to be transmitted based on the protocol.

It should be noted that when the terminal receives the second information transmitted by the network device, the terminal may determine whether to transmit the CSI report based on the protocol.

In some embodiments, it is determined whether to transmit the CSI report based on the first information.

In some embodiments, it is determined whether the terminal transmits the CSI report when the first transceiver is in the sleep state based on the first information.

In some embodiments, it is determined whether the terminal transmits the CSI report when the first transceiver is in the non-working state based on the first information.

In some embodiments, it is determined whether the terminal transmits the CSI report after the first transceiver exits the working state based on the first information.

It should be noted that when the terminal receives the first information transmitted by the network device, or receives the first information and the second information transmitted by the network device, the terminal may determine whether to transmit the CSI report based on the first information.

In some embodiments, the terminal determines the metric reported in the CSI report to be transmitted based on the first information.

In some embodiments, determining whether to transmit the CSI report includes at least one of:
determining whether to transmit the first CSI report;
determining whether to transmit the second CSI report; or
determining the transmission parameters of the first CSI report and/or the second CSI report.

In some embodiments, the terminal determines the transmission time period for the CSI report.

In some embodiments, the terminal that is commanded to transmit the CSI report determines the transmission time period for the CSI report.

It should be noted that the terminal may further determine the transmission time period for the CSI report when it determines that it is necessary to transmit the CSI report.

In some embodiments, the terminal that is commanded to transmit the CSI report determining the transmission time period for the CSI report includes at least one of:
the terminal that is commanded to transmit the first CSI report determining a transmission time period for the first CSI report; or
the terminal that is commanded to transmit the second CSI report determining a transmission time period for the second CSI report.

It should be noted that the terminal may determine the transmission time period for the first CSI report and/or the transmission time period for the second CSI report, respectively, so as to transmit the first CSI report and/or the second CSI report to the network device within the respective transmission time periods specified by the network device. Therefore, the network device may directly determine whether the received CSI report is the first CSI report or the second CSI report based on the time period when the CSI report is received.

In some embodiments, the terminal determines the transmission time period in for the CSI report based on a network configuration.

It is understood that the network device may configure the transmission time period for the CSI report for the terminal, and configure transmission resources for the terminal during the transmission time period, so as to facilitate the terminal to transmit the CSI report.

In some embodiments, the terminal determines the transmission time period in for the CSI report based on the first information.

It should be noted that the network device may configure the transmission time period for the CSI report for the terminal, and indicate the transmission time period for the CSI report by transmitting the first information to the terminal.

In some embodiments, the terminal may receive third information transmitted by the network device.

In some embodiments, the third information is used to indicate the transmission time period for the CSI report.

It should be noted that the network device may configure the transmission time period for the CSI report for the terminal, and indicate the transmission time period for the CSI report by transmitting the third information to the terminal.

In some embodiments, the transmission time period for the CSI report includes at least one of:
an on duration period within a C-DRX cycle configured by the terminal;
a time period after a first duration following the second transceiver of the terminal entering the working state; or
a time period after a second duration following the first transceiver of the terminal entering the sleep state.

It should be noted that in order to save energy, the terminal may be configured with C-DRX. That is, the terminal may periodically enter the sleep state. The terminal may not monitor a physical downlink control channel (PDCCH) in the sleep period of the C-DRX cycle, but may monitor the PDCCH during the on duration of the C-DRX cycle.

It is noted that if the terminal is configured with C-DRX, the transmission time period for the CSI report is the DRX on duration within the C-DRX cycle by default.

In some embodiments, the first duration is determined based on a configuration by the network device.

In some embodiments, the first duration is determined by the first information, or the first duration is determined by the third information.

In some embodiments, the second duration is determined based on a configuration by the network device.

In some embodiments, the second duration is determined by the first information, or the second duration is determined by the third information.

In some embodiments, terms such as "information", "message", "signal", "signaling", "report", "configuration", "indication", "instruction", "command", "channel", "parameter", "field" and "data" are interchangeable.

In some embodiments, terms such as "send", "launch", "report" and "transmit" are interchangeable.

The information indication method based on the embodiments of the disclosure may include at least one of step S2101-step S2102. For example, step S2102 may be implemented as an independent embodiment, or steps S2103-S2105 may be implemented as an independent embodiment, which is not limited herein.

In some embodiments, step S2101 is optional, and one or more of these steps may be omitted or replaced in different embodiments. It is understood that the terminal may determine whether to transmit the CSI report based on the protocol without the first information transmitted by the network device.

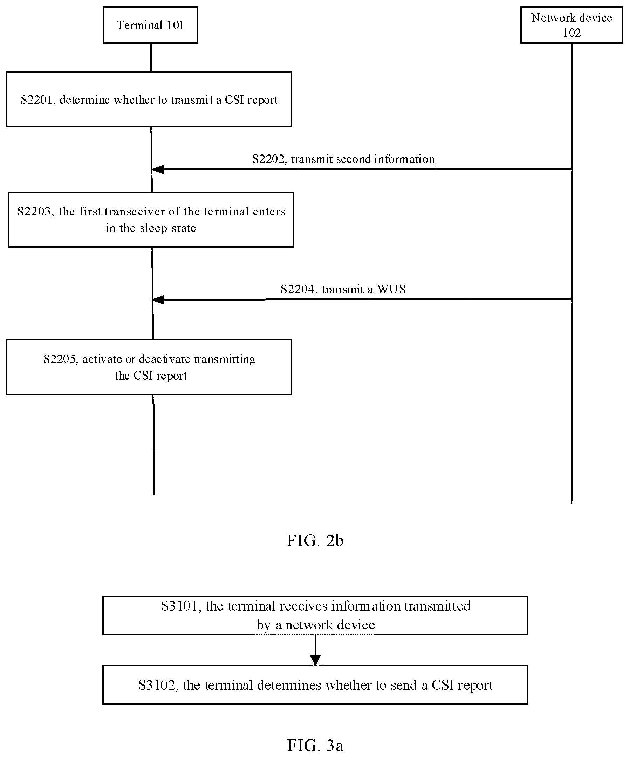

FIG. 2b is an interactive schematic diagram of an information indication method illustrated based on an embodiment of the disclosure. As illustrated in FIG. 2b, the embodiment of the disclosure involves in an information indication method. The method is applied to the communication system 100, and includes the following steps.

At step S2201, the terminal determines whether to transmit a CSI report.

In some embodiments, the terminal determines whether to transmit the CSI report based on a protocol.

It should be noted that the terminal can decide whether to transmit the CSI report to the network device by itself based on the protocol, without a configuration transmitted by the network device.

In some embodiments, the terminal may determine a metric reported in a CSI report to be transmitted based on the protocol.

In some embodiments, the metric reported in the CSI report includes, but is not limited to, at least one of a CQI, a PMI and an RI.

In some embodiments, the terminal determines whether to transmit a first CSI report based on the protocol.

In some embodiments, the first CSI report includes beam measurement information.

In some embodiments, the beam measurement information is used to determine a service beam of the terminal.

In some embodiments, the beam measurement information includes at least one of:
L1-RSRP;
L1-RSRQ; or
L1-SINR.

In some embodiments, the beam measurement information further includes a beam identifier.

In some embodiments, the terminal determines whether to transmit a second CSI report based on the protocol.

In some embodiments, the metric reported in the second CSI report includes, but is not limited to, at least one of a CQI, a PMI and an RI.

It should be noted that the metric reported in the second CSI report is at least partially different from that included in the first CSI report. That is, the second CSI report does not include the beam measurement information.

In some embodiments, the terminal determines transmission parameters of the first CSI report and/or the second CSI report based on the protocol.

In some embodiments, the terminal determines a transmission time for the CSI report based on the protocol.

It should be noted that the terminal may further determine the transmission time period for the CSI report when it determines that it is necessary to transmit the CSI report.

In some embodiments, the terminal determining the transmission time period for the CSI report based on the protocol, includes at least one of:
determining a transmission time period for the first CSI report based on the protocol; or
determining a transmission time period for the second CSI report based on the protocol.

It should be noted that the terminal may determine the transmission time period for the first CSI report and/or the transmission time period for the second CSI report, respectively, so as to transmit the first CSI report and/or the second CSI report to the network device within the respective transmission time periods based on the protocol. Therefore, the network device may directly determine whether the received CSI report is the first CSI report or the second CSI report based on the time period when the CSI report is received.

In some embodiments, the transmission time period for the CSI report includes at least one of:
an on-duration period within a C-DRX cycle configured by the terminal;
a time period after a first duration following the second transceiver of the terminal entering the working state; or
a time period after a second duration following the first transceiver of the terminal entering the sleep state.

It should be noted that in order to save energy, the terminal is configured with C-DRX, that is, the terminal may periodically enter the sleep state. The terminal may not monitor a PDCCH in the sleep period of the C-DRX cycle, but may monitor the PDCCH during the on duration of the C-DRX cycle.

It is noted that the terminal is configured with C-DRX. The transmission time period for the CSI report is the DRX on duration within the C-DRX cycle by default.

In some embodiments, the first duration is determined based on the protocol.

In some embodiments, the second duration is determined based on the protocol.

In some embodiments, the terminal determines whether to transmit the CSI report when the first transceiver is in the current sleep state based on the protocol.

In some embodiments, across different sleep periods of the first transceiver of the terminal, operations related to transmitting the CSI report are performed independently between each other.

In some embodiments, the operation of transmitting the CSI report of the terminal during one sleep period of the first transceiver is independent of the operation of transmitting the CSI report of the terminal during another sleep period of the first transceiver.

It is understood that during different sleep periods of the first transceiver of the terminal, the operations related to transmitting the CSI report of the terminal are independent between each other.

At step S2202, the network device transmits second information to the terminal.

In some embodiments, the terminal receives the second information transmitted by the network device.

In some embodiments, the second information indicates at least one of:
whether the first transceiver enters the sleep state; or
whether the second transceiver enters the working state.

It is understood that the second information may include, but is not limited to, an activation command.

In some embodiments, the second information is carried in a MAC CE.

In some embodiments, the second information is carried in DCI.

It should be noted that the network device may reuse the existing signaling to transmit the second information, thus reducing signaling overhead.

At step S2203, the first transceiver of the terminal enters in the sleep state.

In some embodiments, the terminal makes the first transceiver enter in the sleep state based on the second information.

It should be noted that the first transceiver is in the sleep state, it indicates that the first transceiver is in a LP state and cannot perform transceiving functions or can only perform simple transceiving functions.

In some embodiments, the first transceiver of the terminal is in the sleep state, and the second transceiver is in the working state.

At step S2204, the network device transmits the WUS to the terminal.

In some embodiments, the WUS is used to wake up the first transceiver.

In some embodiments, the WUS is a WUS associated with the second transceiver. The WUS includes but is not limited to a LP WUS.

In some embodiments, the WUS may be a physical layer signal transmitted based on a preset sequence, which may not carry any information content.

It is understood that the WUS may be a signal only for waking up the first transceiver, and does not carry any information.

In some embodiments, the WUS may carry the first information.

It should be noted that the WUS may be a signal carrying the information content. After receiving the WUS, the terminal may extract the first information carried by the WUS by decoding the WUS.

In some embodiments, the first information in the WUS is used to activate or deactivate transmitting the CSI report by the terminal.

It should be noted that during the sleep period of the first transceiver of the terminal, the network device may transmit the WUS containing the first information to the terminal, so as to flexibly adjust the transmission of the CSI report of the terminal during the sleep period of the first transceiver.

For example, during the sleep period of the first transceiver, after the terminal transmits the CSI report to the network device, the network device transmits the WUS containing the first information to the terminal, so that the terminal stops transmitting the CSI report to the network device after receiving the reference signal.

For another example, the first transceiver is in the sleep state, and the terminal does not transmit the CSI report to the network device, the network device may transmit the WUS containing the first information to the terminal, so that the terminal starts to transmit the CSI report to the network device after receiving the reference signal.

In some embodiments, the first information carried by the WUS is used to indicate whether to transmit the periodic CSI report, the aperiodic CSI report or the semi-static CSI report.

In some embodiments, the first information carried by the WUS is used to trigger the terminal to transmit the aperiodic CSI report.

It should be noted that the network device may transmit the reference signal containing the first information to the terminal based on the current communication environment or its own communication requirements, so as to trigger the terminal to transmit the aperiodic CSI report to the network device.

For example, if the transmission cycle of the CSI report configured for the terminal has not reached, the network device may transmit the WUS to the terminal in the case of channel quality changes, so as to trigger the terminal to transmit the aperiodic CSI report. This is convenient for the network device to know the current CSI in time.

At step S2205, the terminal activates or deactivates transmitting the CSI report.

In some embodiments, the terminal activates or deactivates transmitting the CSI report based on the first information carried by the WUS.

In some embodiments, the terminal may activate or deactivate transmitting the CSI report when the first transceiver is in the current sleep state based on the first information carried by the WUS.

The information indication method based on the embodiments of the disclosure may include at least one of step S2201-step S2205. For example, step S2201 may be implemented as an independent embodiment, or steps S2201-S2204 may be implemented as independent embodiments, which is not limited here.

In some embodiments, step S2201 is optional, and one or more of these steps may be omitted or replaced in different embodiments. It is understood that the network device can specify whether the terminal transmits the CSI report or not, and it is unnecessary for the terminal to determine by itself.

In some embodiments, step S2204 and step S2205 are optional, and one or more of these steps may be omitted or replaced in different embodiments. It is understood that the WUS transmitted by the network device may not carry the first information, and the WUS is only used for the terminal to wake up the first transceiver, so there is no need to change the transmission of the CSI report of the terminal.

FIG. 3a is a schematic flowchart of an information indication method illustrated based on an embodiment of the disclosure. As illustrated in FIG. 3a, the embodiment of the disclosure involves in an information indication method. The method is performed by the terminal 101, and includes the following steps.

At step S3101, the terminal receives information transmitted by a network device.

In some embodiments, the optional implementations of step S3101 may refer to the optional implementations of step S2101 in FIG. 2a, and other related parts in the embodiment of FIG. 2a, which will not be repeated herein.

At step S3102, the terminal determines whether to transmit a CSI report.

In some embodiments, the optional implementations of step S3102 may refer to the optional implementations of step S2102 in FIG. 2a, and other related parts in the embodiment of FIG. 2a, which will not be repeated herein.

The information indication method based on the embodiments of the disclosure may include at least one of steps S3101-S3102. For example, step S3102 may be implemented as an independent embodiment, or steps S3103-S3105 may be implemented as independent embodiments, which is not limited herein.

In some embodiments, step S3101 is optional, and one or more of these steps may be omitted or replaced in different embodiments. It is understood that the terminal may determine whether to transmit the CSI report based on the protocol, without the first information transmitted by the network device.

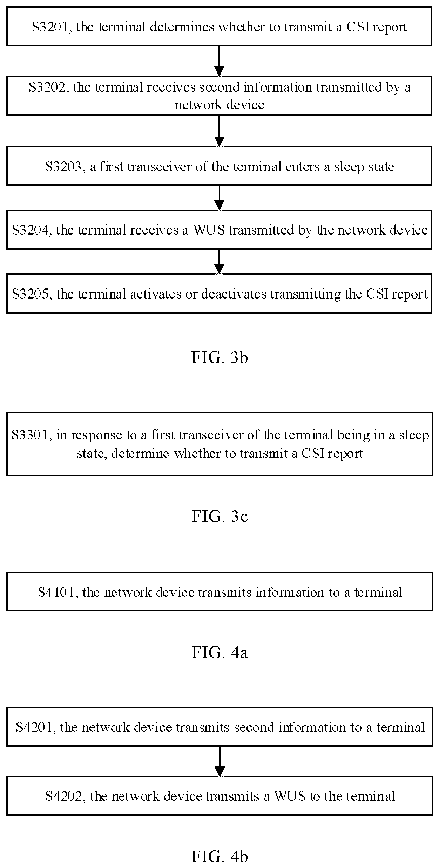

FIG. 3b is a schematic flowchart of an information indication method illustrated based on an embodiment of the disclosure. As illustrated in FIG. 3b, the embodiment of the disclosure involves in an information indication method. The method is performed by the terminal 101, and includes the following steps.

At step S3201, the terminal determines whether to transmit a CSI report.

In some embodiments, the optional implementations of step S3201 may refer to the optional implementations of step S2201 in FIG. 2b, and other related parts in the embodiment of FIG. 2b, which will not be repeated herein.

At step S3202, the terminal receives second information transmitted by a network device.

In some embodiments, the optional implementations of step S3202 may refer to the optional implementations of step S2202 in FIG. 2b, and other related parts in the embodiment of FIG. 2b, which will not be repeated herein.

At step S3203, a first transceiver of the terminal enters a sleep state.

In some embodiments, the optional implementations of step S3203 may refer to the optional implementations of step S2203 in FIG. 2b, and other related parts in the embodiment of FIG. 2b, which will not be repeated herein.

At step S3204, the terminal receives a WUS transmitted by the network device.

In some embodiments, the optional implementations of step S3204 may refer to the optional implementations of step S2204 in FIG. 2b, and other related parts in the embodiment of FIG. 2b, which will not be repeated herein.

At step S3205, the terminal activates or deactivates transmitting the CSI report.

In some embodiments, the optional implementations of step S3205 may refer to the optional implementations of step S2205 in FIG. 2b, and other related parts in the embodiment of FIG. 2b, which will not be repeated herein.

The information indication method based on the embodiments of the disclosure may include at least one of steps S3201-S3205. For example, step S3201 may be implemented as an independent embodiment, or steps S3201-S3204 may be implemented as independent embodiments, which is not limited herein.

In some embodiments, step S3201 is optional, and one or more of these steps may be omitted or replaced in different embodiments. It is understood that the terminal may specify whether the terminal transmits the CSI report or not, and it is unnecessary for the terminal to determine by itself.

In some embodiments, step S3204 and step S3205 are optional, and one or more of these steps may be omitted or replaced in different embodiments. It is understood that the WUS transmitted by the network device may not carry the first information, and the WUS is only used for the terminal to wake up the first transceiver, so there is no need to change the transmission of the CSI report of the terminal.

FIG. 3c is a schematic flowchart of an information indication method illustrated based on an embodiment of the disclosure. As illustrated in FIG. 3c, the embodiment of the disclosure involves in an information indication method. The method is performed by the terminal 101, and includes the following step.

At step S3301, in response to a first transceiver of the terminal being in a sleep state, it is determined whether to transmit a CSI report.

In some embodiments, the terminal includes the first transceiver and a second transceiver, and a power consumption of the first transceiver in a working state is greater than a power consumption of the second transceiver in a working state.

In some embodiments, determining whether to transmit the CSI report includes at least one of:
determining whether to transmit the CSI report based on a protocol; or
determining whether to transmit the CSI report based on first information transmitted by a network device.

In some embodiments, the first information indicates at least one of:
a first indication, indicating whether the terminal transmits a first CSI report, in which the first CSI report includes: beam measurement information;
a second indication, indicating whether the terminal transmits a second CSI report, in which the second CSI report is different from a first CSI report; or
a third indication, indicating transmission parameters of a first CSI report and/or a second CSI report.

In some embodiments, the beam measurement information includes at least one of:
L1-RSRP;
L1-RSRQ; or
L1-SINR.

In some embodiments, the method further includes:
receiving second information transmitted by the network device;
the second information indicating at least one of:
whether the first transceiver enters the sleep state; or
whether the second transceiver enters the working state.

In some embodiments, the second information and the first information are carried in the same message.

In some embodiments, the message includes at least one of:
a MAC CE; or
DCI.

In some embodiments, the first information is carried in a WUS associated with the second transceiver.

In some embodiments, the first information is used to activate or deactivate transmitting the CSI report by the terminal.

In some embodiments, across different sleep periods of the first transceiver of the terminal, operations related to transmitting the CSI report are performed independently between each other.

In some embodiments, the method further includes:
determining by the terminal a transmission time period for the CSI report.

In some embodiments, the terminal determining the transmission time period for the CSI report includes:
determining the transmission time period for the CSI report based on a protocol;
   or,
determining the transmission time period for the CSI report based on a configuration by the network device.

In some embodiments, the transmission time period for the CSI report includes at least one of:
an on-duration period within a C-DRX cycle configured by the terminal;
a time period after a first duration following the second transceiver of the terminal entering the working state; or
a time period after a second duration following the first transceiver of the terminal entering the sleep state.

FIG. 4a is a schematic flowchart of an information indication method illustrated based on an embodiment of the disclosure. As illustrated in FIG. 4a, the embodiment of the disclosure involves in an information indication method. The method is performed by the network device 102, and includes the following step.

At step S4101, the network device transmits information to a terminal.

In some embodiments, the optional implementations of step S4101 may refer to the optional implementations of step S2101 in FIG. 2a, and other related parts in the embodiment of FIG. 2a, which will not be repeated herein.

FIG. 4b is a schematic flowchart of an information indication method illustrated based on an embodiment of the disclosure. As illustrated in FIG. 4b, the embodiment of the disclosure involves in an information indication method. The method is performed by the network device 102, and includes the following steps.

At step S4201, the network device transmits second information to a terminal.

In some embodiments, the optional implementations of step S4201 may refer to the optional implementations of step S2202 in FIG. 2b, and other related parts in the embodiment of FIG. 2b, which will not be repeated herein.

At step S4202, the network device transmits a WUS to the terminal.

In some embodiments, the optional implementations of step S4202 may refer to the optional implementations of step S2204 in FIG. 2b, and other related parts in the embodiment of FIG. 2b, which will not be repeated herein.

The information indication method based on the embodiments of the disclosure may include at least one of steps S4201-S4202. For example, step S4201 may be implemented as an independent embodiment, which is not limited herein.

In some embodiments, step S4202 is optional, and one or more of these steps may be omitted or replaced in different embodiments. It is understood that the WUS transmitted by the network device may not carry first information, and the WUS is only used for the terminal to wake up the first transceiver.

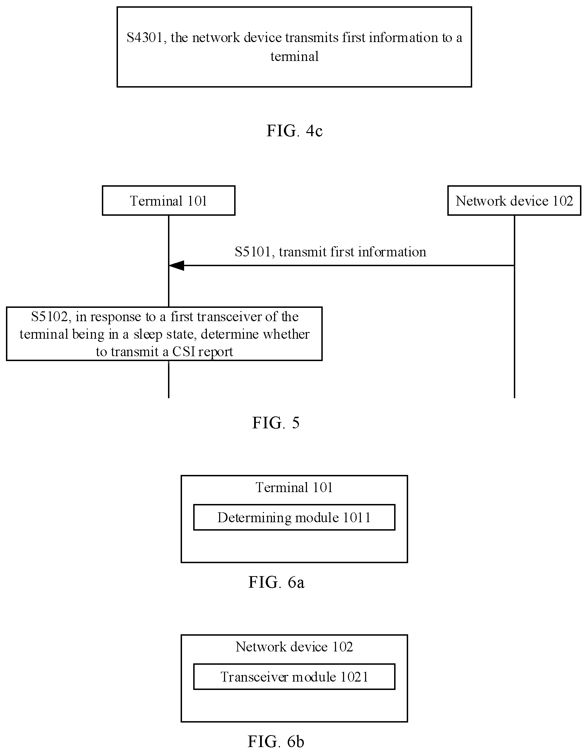

FIG. 4c is a schematic flowchart of an information indication method illustrated based on an embodiment of the disclosure. As illustrated in FIG. 4c, the embodiment of the disclosure involves in an information indication method. The method is performed by the network device 102, and includes the following step.

At step S4301, the network device transmits first information to a terminal.

In some embodiments, the first information is used for the terminal to determine whether to transmit a CSI report when a first transceiver is in a sleep state.

In some embodiments, the terminal includes the first transceiver and a second transceiver, and a power consumption of the first transceiver in a working state is greater than a power consumption of the second transceiver in a working state.

In some embodiments, the first information indicates at least one of:
a first indication, indicating whether the terminal transmits a first CSI report, in which the first CSI report includes: beam measurement information;
a second indication, indicating whether the terminal transmits a second CSI report, in which the second CSI report is different from a first CSI report; or
a third indication, indicating transmission parameters of a first CSI report and/or a second CSI report.

In some embodiments, the beam measurement information includes at least one of:
L1-RSRP;
L1-RSRQ; or
L1-SINR.

In some embodiments, the method further includes:
transmitting second information to the terminal;
the second information indicating at least one of:
whether the first transceiver enters the sleep state; or
whether the second transceiver enters the working state.

In some embodiments, the second information and the first information are carried in the same message.

In some embodiments, the message includes at least one of:
a MAC CE; or
DCI.

In some embodiments, the first information is carried in a WUS associated with the second transceiver.

In some embodiments, the first information is used to activate or deactivate transmitting the CSI report by the terminal.

In some embodiments, across different sleep periods of the first transceiver of the terminal, operations related to transmitting the CSI report are performed independently between each other.

In some embodiments, the method further includes:
configuring a transmission time period for the CSI report for the terminal.

In some embodiments, the transmission time period for the CSI report includes at least one of:
an on-duration period within a C-DRX cycle configured by the terminal;
a time period after a first duration following the second transceiver of the terminal entering the working state; or
a time period after a second duration following the first transceiver of the terminal entering the sleep state.

FIG. 5 is an interactive schematic diagram of an information indication method illustrated based on an embodiment of the disclosure. As illustrated in FIG. 5, the embodiment of the disclosure involves in an information indication method. The method is applied to the communication system 100, and includes the following steps.

At step S5101, the network device transmits first information to the terminal.

At step S5102, in response to a first transceiver of the terminal being in a sleep state, it is determined whether to transmit a CSI report.

In some embodiments, the first information is used for the terminal to determine whether to transmit a CSI report when the first transceiver is in the sleep state.

In some embodiments, the terminal includes the first transceiver and a second transceiver, and a power consumption of the first transceiver in a working state is greater than a power consumption of the second transceiver in a working state.

In some embodiments, the above method may include the methods described based on the embodiments on the communication system side, the terminal side and the network device side, which will not be repeated here.

Option 1: a first signaling indicates whether the terminal needs to transmit a CSI report when a master transceiver is in a sleep state and a LP WUR is in a monitoring state.

It should be noted that the first signaling may correspond to the first information of the disclosure, the master transceiver may correspond to the first transceiver of the disclosure, and the master transceiver is in the sleep state and the LP WUR is in the monitoring state may correspond to that the first transceiver of the terminal in the disclosure is in the sleep state and the second transceiver is in the working state.

Option 2: based on Option 1, a second signaling indicates whether the terminal needs to transmit a CSI report containing a L1-RSRP when the master transceiver is in the sleep state and the LP WUR is in the monitoring state.

It should be noted that the second signaling may correspond to the first information of the disclosure, and the CSI report containing the L1-RSRP may correspond to the first CSI report of the disclosure.

Option 3: based on Option 1, a third signaling indicates whether the terminal needs to transmit a CSI report not containing a L1-RSRP when the master transceiver is in the sleep state and the LP WUR is in the monitoring state.

It should be noted that the third signaling may correspond to the first information of the disclosure, and the CSI report not containing the L1-RSRP may correspond to the second CSI report of the disclosure.

The first signaling, the second signaling and the third signaling may be the same signaling, or may be different signaling.

Option 4: based on any one of Options 1-3, the first signaling, the second signaling or the third signaling may be one of the following:
(1) an activation command for indicating to activate the monitoring state of the LP WUS, it should be noted that the activation command may be a MAC CE or DCI;
(2) a LP-WUS; and
(3) an RRC layer signaling.

It should be noted that the activation command may correspond to the second information of the disclosure, and the LP WUS may correspond to the WUS associated with the second transceiver of the disclosure.

Option 5: based on any one of Options 1-4, when the terminal is instructed to transmit the CSI report, a time period for it to transmit the CSI report may be pre-configured by the network device or based on a protocol.

It should be noted that the network device may indicate the transmission time period for the CSI report using the first signaling, the second signaling or the third signaling. Or, the network device may also indicate the transmission time period for the CSI report using any other signaling.

For example, when the terminal is configured with C-DRX, the transmission time period for the CSI report may be within a working time period in a C-DRX on-duration.

For another example, the transmission time period for the CSI report may be after a duration T after the LP WUS of the terminal enters the monitoring state. That is, the terminal does not need to report the CSI report within the duration T after the LP WUS of the terminal enters the monitoring state.

It should be noted that T is defined by a protocol or configured by the network device.

It is noted that, considering that the LP WUS of the terminal (UE) just enters the monitoring state, it will not wake up so quickly, so there is no need for the CSI report to make accurate self-adaption scheduling, and the original CSI report can still maintain timeliness. Therefore, the report will not be transmitted within the duration T.

As an example, the information indicated by the first signaling, the second signaling and/or the third signaling may be indicated only by the activation command.

When the BS indicates that the master transceiver enters in the sleep state and the LP WUR enters in the monitoring state, it also indicates the terminal whether to report the corresponding CSI report when the master transceiver is in the sleep state. In this mode, the terminal needs to transmit or not transmit the corresponding CSI report based on the indication of the activation command when the master transceiver is in the sleep state and the LP WUR is in the monitoring state.

As an example, the information indicated by the first signaling, the second signaling and/or the third signaling may be indicated by the activation command. Therefore, the information indicated by the first signaling, the second signaling and/or the third signaling may be indicated by the LP WUS when the master transceiver is in the sleep state and the LP WUR is in the monitoring state, so that the terminal can adjust the transmission of the corresponding CSI report flexibly (i.e., whether the CSI report is transmitted or not) when the master transceiver is in the sleep state and the LP WUR is in the monitoring state.

It is understood that, the behavior of whether the terminal transmits the CSI report during the current LP WUS monitoring state/master transceiver' sleep state may be flexibly adjusted via the first, second, or third instruction carried in the LP WUR.

As an example, the first signaling, the second signaling and/or the third signaling may be indicated by the LP WUS when the master transceiver is in the sleep state and the LP WUR is in the monitoring state, and then the terminal may set or flexibly adjust the behavior of whether transmits the corresponding CSI report (i.e., whether the CSI report is transmitted or not) when the master transceiver is in the sleep state and the LP WUR is in the monitoring state.

It is understood that the transmission may be flexibly adjusted by the LP WUS.

It is noted that before the LP WUS just enters the monitoring state and the master transceiver enters the sleep state and the terminal first monitors an indication indicating its CSI report transmission mode from the LP WUS, the transmission of the CSI report of the terminal is by default based on the protocol. For example, the CSI report will not by reported by default, or the operation of the UE at this stage is configured through the RRC layer signaling. For example, the configured operation may be the CSI report not containing the L1-RSRP will not be reported.

As an example, the information for triggering the transmission of the aperiodic CSI report may be transmitted in the LP WUS.

The embodiments of the disclosure provide an apparatus for implementing any of the above methods. For example, an apparatus is provided, and the apparatus includes units/modules for implementing steps performed by the terminal in any of the above methods. For another example, another apparatus is provided, which includes units/modules for implementing steps performed by the network device (e.g., AN device, CN function node, CN device, etc.) in any of the above methods.

It should be understood that the units/modules in the above apparatus are divided based on their logical functions, and some or all of the above units/modules may be integrated on a single physical entity or may be physically separated in practical applications. In addition, the units/modules in the above apparatus may be implemented by software called by a processor. For example, the apparatus includes a processor, which is connected to a memory. The memory stores instructions, and the processor calls the instructions stored in the memory to implement any of the above methods or to implement functions of the units/modules in the above apparatus. The processor may be a general-purpose processor, such as a central processing unit (CPU) or a micro-processor, and the memory is a memory in the apparatus or a memory external to the apparatus. The units/modules in the apparatus may be implemented in the form of a hardware circuit. Some or all of the functions of the units/modules may be achieved through the design of the hardware circuit. The hardware circuit is understood as one or more processors. For example, in an implementation, the hardware circuit is an application-specific integrated circuit (ASIC). Or, some or all of the functions of the units/modules are achieved through the design of a logical relationship between components in the circuit. As another example, in another implementation, the hardware circuit may be implemented through a programmable logic device (PLD). Taking a field programmable gate array (FPGA) as an example, a large number of logical gates are included therein, and their connection relationships are configured through a configuration file to implement some or all of the functions of the above units/modules. All the units/modules of the above apparatus may be implemented entirely through the software called by the processor, or entirely through the hardware circuit, or partially through the software called by the processor and partially through the hardware circuit.

In the embodiments of the disclosure, the processor is a circuit having signal processing capabilities. In an implementation, the processor may be a circuit having instruction reading and executing capabilities, such as a CPU, a micro-processor, a graphics processing unit (GPU) (which is understood as a micro-processor), or a digital signal processor (DSP). In another implementation, the processor implements certain functions through the logical relationship of the hardware circuit, which may be fixed or re-configurable. For example, the processor may be a hardware circuit implemented by an ASIC or a PLD, such as an FPGA. In the re-configurable hardware circuit, the procedure for the processor to load the configuration file to configure the hardware circuit is understood as a procedure for the processor to load the instructions to implement some or all of the functions of the above units/modules. In addition, the processor may also be an artificial intelligence (AI)-designed hardware circuit, which is understood as an ASIC, such as a neural network processing unit (NPU), a tensor processing unit (TPU) and a deep learning processing unit (DPU).

FIG. 6a is a schematic structural diagram of a terminal provided by an embodiment of the disclosure. As illustrated in FIG. 6a, the terminal 101 includes: a determining module 1011, configured to, in response to a first transceiver of a terminal being in a sleep state, determine whether to transmit a CSI report, in which the terminal includes the first transceiver and a second transceiver, and a power consumption of the first transceiver in a working state is greater than a power consumption of the second transceiver in a working state. Optionally, the determining module 1011 is used to perform the steps related to information determination performed by the terminal in any of the above information indication methods, which will not be repeated here. Optionally, the terminal 101 further includes a transceiver module, configured to perform the steps related to transmission and reception performed by the terminal in any of the above methods, which will not be repeated here.

FIG. 6b is a schematic structural diagram of a network device provided by an embodiment of the disclosure. As illustrated in FIG. 6b, the network device 102 includes a transceiver module 1021, configured to transmit first information to a terminal, in which the first information is used for the terminal to determine whether to transmit a CSI report when a first transceiver is in a sleep state, the terminal includes the first transceiver and a second transceiver, and a power consumption of the first transceiver in a working state is greater than a power consumption of the second transceiver in a working state. Optionally, the transceiver module 1021 is used to perform the steps related to information transmission and reception performed by the terminal in any of the above information indication methods, which will not be repeated here. Optionally, the network device 102 further includes a processing module, configured to perform the steps related to information processing performed by the terminal in any of the above methods, which will not be repeated here.

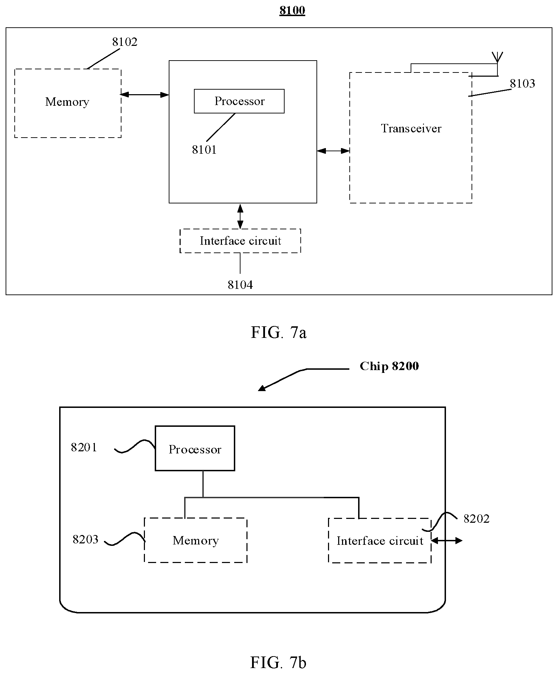

FIG. 7a is a schematic structural diagram of a communication device 8100 provided by an embodiment of the disclosure. The communication device 8100 may be a network device (e.g., an AN device or a CN device), a terminal (e.g., UE), a chip, a chip system or a processor that supports the network device to implement any of the above methods, or a chip, a chip system or a processor that supports the terminal to implement any of the above methods. The communication device 8100 is used to implement the information indication method described in the above method embodiments, which can refer to the descriptions in the above method embodiments.

As illustrated in FIG. 7a, the communication device 8100 includes one or more processors 8101. The processor 8101 may be a general-purpose processor or a dedicated processor, such as a baseband processor or a central processor. The baseband processor is used to process communication protocols and communication data, while the central processor is used to control the communication device (e.g., a BS, a baseband chip, a terminal, a terminal chip, a DU or a CU), execute programs, and process data of the programs. The processor 8101 is used to call instructions to cause the communication device 8100 to implement any of the above methods.

In some embodiments, the communication device 8100 further includes one or more memories 8102 for storing instructions. Optionally, all or part of the memories 8102 may be external to the communication device 8100.

In some embodiments, the communication device 8100 further includes one or more transceivers 8103. When the communication device 8100 includes one or more transceivers 8103, the transceiver 8103 performs the communication steps such as transmission and reception in the above method, and the processor 8101 performs other steps.

In some embodiments, the transceiver may include a receiver and a transmitter. The receiver and the transmitter may be separated or integrated together. Optionally, terms "transceiver", "transceiver unit", "transceiver machine" and "transceiver circuit" are interchangeable, and terms "transmitter", "transmitting unit", "transmitter machine" and "transmitting circuit" are also interchangeable. In addition, terms "receiver", "receiving unit", "receiver machine" and "receiving circuit" are interchangeable.

Optionally, the communication device 8100 further includes one or more interface circuits 8104. The interface circuit 8104 is connected with the memory 8102, and it is used to receive signals from the memory 8102 or other devices and transmit signals to the memory 8102 or other devices. For example, the interface circuit 8104 can read the instructions stored in the memory 8102 and transmit the instructions to the processor 8101.

The communication device 8100 described in the above embodiments may be a network device or a terminal. However, the scope of the communication device 8100 is not limited in the disclosure, and the structure of the communication device 8100 is not limited by FIG. 7a. The communication device may be a standalone device or part of a larger device. For example, the communication device may be: (1) a standalone integrated circuit (IC), a chip, a chip system or a sub-system; (2) a collection of one or more ICs (optionally, the collection includes storage components for storing data and programs); (3) an ASIC, such as a modem; (4) a module that can be embedded in other devices; (5) a receiver, a terminal, a smart terminal, a cellular phone, a wireless device, a handheld device, a mobile unit, an in-vehicle device, a network device, a cloud device, an AI device, etc.; or (6) others.

FIG. 7b is a schematic structural diagram of a chip 8200 provided by an embodiment of the disclosure. The case that the communication device 8100 is a chip or a chip system can refer to the schematic structural diagram of the chip 8200 shown in FIG. 7b, which is not limited herein.

The chip 8200 includes one or more processors 8201, and the processor 8201 is used to call instructions to cause the chip 8200 to implement any of the above methods.

In some embodiments, the chip 8200 includes one or more interface circuits 8202. The interface circuit 8202 is connected to one or more memories 8203, and it is used to receive signals from the memory 8203 or other devices and send signals to the memory 8203 or other devices. For example, the interface circuit 8202 can read instructions stored in the memory 8203 and send the instructions to the processor 8201. Optionally, terms "interface circuit", "interface", "transceiver pin" and "transceiver" are interchangeable.

In some embodiments, the chip 8200 further includes the one or more memories 8203 for storing the instructions. Optionally, all or part of the memories 8203 may be external to the chip 8200.

The disclosure also provides a storage medium. The storage medium stores instructions, and when the instructions are executed by the communication device 8100, the communication device 8100 is caused to implement any of the above methods. Optionally, the storage medium is an electronic storage medium. Optionally, the storage medium may be a computer-readable storage medium or a storage medium readable by other devices. Optionally, the storage medium may be a non-transitory storage medium or a transitory storage medium.

The disclosure also provides a program product. When the program product is executed by the communication device 8100, the communication device 8100 is caused to implement any of the above methods. Optionally, the program product is a computer program product.

The disclosure also provides a computer program. When the computer program is executed by a computer, the computer is caused to implement any of the above methods.

Other implementations of the disclosure will be apparent to those skilled in the art from consideration of the specification and practice of the disclosure disclosed here. The disclosure is intended to cover any variations, uses or adaptations of the disclosure following the general principles thereof and including such departures from the disclosure as come within known or customary practice in the art. It is intended that the specification and embodiments be considered as illustrative only, with a true scope and spirit of the embodiments of the disclosure being indicated by the attached claims.

It is noted that the embodiments of the disclosure are not limited to the exact structure that has been described above and illustrated in the accompanying drawings, and that various modifications and changes can be made without departing from the scope thereof. It is intended that the scope of the disclosure only be limited by the attached claims.

## Claims

1. An information indication method, comprising:
in response to a first transceiver of a terminal being in a sleep state, determining whether to transmit a channel state information (CSI) report, wherein the terminal comprises the first transceiver and a second transceiver, and a power consumption of the first transceiver in a working state is greater than a power consumption of the second transceiver in a working state.

2. The method of claim 1, wherein determining whether to transmit the CSI report comprises at least one of:
determining whether to transmit the CSI report based on a protocol; or
determining whether to transmit the CSI report based on first information transmitted by a network device.

3. The method of claim 2, wherein the first information indicates at least one of:
a first indication indicating whether the terminal transmits a first CSI report, wherein the first CSI report comprises beam measurement information;
a second indication indicating whether the terminal transmits a second CSI report, wherein the second CSI report is different from a first CSI report; or
a third indication indicating transmission parameters of a first CSI report and/or a second CSI report

4. The method of claim 3, wherein the beam measurement information comprises at least one of:
Layer 1(L1)-reference signal receiving power (RSRP);
L1-reference signal receiving quality (RSRQ); or
L1-signal to interference-plus-noise ratio (SINR).

5. The method of any one of claims 2-4, further comprising:
receiving second information transmitted by a network device, wherein the second information indicates at least one of:
whether the first transceiver enters the sleep state; or
whether the second transceiver enters the working state.

6. The method of claim 5, wherein the second information and the first information are carried in a same message.

7. The method of claim 6, wherein the message comprises at least one of:
a media access control (MAC) control element (CE); or
downlink control information (DCI).

8. The method of any one of claims 2-7, wherein the first information is carried in a wake up signal associated with the second transceiver.

9. The method of claim 8, wherein the first information is used to activate or deactivate transmitting the CSI report by the terminal.

10. The method of any one of claims 1-9, wherein across different sleep periods of the first transceiver of the terminal, operations related to transmitting the CSI report are performed independently between each other.

11. The method of any one of claims 1-10, further comprising:
determining, by the terminal, a transmission time period for the CSI report.

12. The method of claim 11, wherein determining, by the terminal, the transmission time period for the CSI report comprises:
determining the transmission time period for the CSI report based on a protocol;
or,
determining the transmission time period for the CSI report based on a network configuration.

13. The method of claim 11 or 12, wherein the transmission time period for the CSI report comprises at least one of:
an on-duration period within a connected discontinuous reception DRX (C-DRX) cycle configured by the terminal;
a time period after a first duration following the second transceiver of the terminal entering the working state; or
a time period after a second duration following the first transceiver of the terminal entering the sleep state.

14. An information indication method, comprising:
transmitting, by a network device, first information to a terminal, wherein the first information is used for the terminal to determine whether to transmit a channel state information (CSI) report in response to a first transceiver being in a sleep state, the terminal comprises the first transceiver and a second transceiver, and a power consumption of the first transceiver in a working state is greater than a power consumption of the second transceiver in a working state.

15. The method of claim 14, wherein the first information indicates at least one of:
a first indication indicating whether the terminal transmits a first CSI report, wherein the first CSI report comprises beam measurement information;
a second indication indicating whether the terminal transmits a second CSI report, wherein the second CSI report is different from a first CSI report; or
a third indication indicating transmission parameters of a first CSI report and/or a second CSI report.

16. The method of claim 15, wherein the beam measurement information comprises at least one of:
Layer 1 (L1)-reference signal receiving power (RSRP);
L1-reference signal receiving quality (RSRQ); or
L1-signal to interference-plus-noise ratio (SINR).

17. The method of any one of claims 14-16, further comprising:
transmitting second information to the terminal, wherein the second information indicates at least one of:
whether the first transceiver enters the sleep state; or
whether the second transceiver enters the working state.

18. The method of claim 17, wherein the second information and the first information are carried in a same message.

19. The method of claim 18, wherein the message comprises at least one of:
a media access control (MAC) control element (CE); or
downlink control information (DCI).

20. The method of any one of claims 14-19, wherein the first information is carried in a wake up signal associated with the second transceiver.

21. The method of claim 20, wherein the first information is used to activate or deactivate transmitting the CSI report by the terminal.

22. The method of any one of claims 14-21, wherein across different sleep periods of the first transceiver of the terminal, operations related to transmitting the CSI report are performed independently between each other.

23. The method of any one of claims 14-22, further comprising:
configuring a transmission time period for the CSI report.

24. The method of claim 23, wherein the transmission time period for the CSI report comprises at least one of:
an on-duration period within a connected discontinuous reception DRX (C-DRX) cycle configured by the terminal;
a time period after a first duration following the second transceiver of the terminal entering the working state; or
a time period after a second duration following the first transceiver of the terminal entering the sleep state.

25. An information indication method, comprising:
transmitting, by a network device, first information to a terminal, wherein the first information is used for the terminal to determine whether to transmit a channel state information (CSI) report in response to a first transceiver being in a sleep state; and
in response to the first transceiver of the terminal being in a sleep state, determining whether to transmit the CSI report, wherein the terminal comprises the first transceiver and a second transceiver, and a power consumption of the first transceiver in a working state is greater than a power consumption of the second transceiver in a working state.

26. A terminal, comprising:
a determining module, configured to, in response to a first transceiver of a terminal being in a sleep state, determine whether to transmit a channel state information (CSI) report, wherein the terminal comprises the first transceiver and a second transceiver, and a power consumption of the first transceiver in a working state is greater than a power consumption of the second transceiver in a working state.

27. A network device, comprising:
a transceiver module, configured to transmit first information to a terminal, wherein the first information is used for the terminal to determine whether to transmit a channel state information (CSI) report in response to a first transceiver being in a sleep state, the terminal comprises the first transceiver and a second transceiver, and a power consumption of the first transceiver in a working state is greater than a power consumption of the second transceiver in a working state.

28. A communication system, comprising a terminal and a network device, wherein the terminal is configured to implement the information indication method of any one of claims 1-13, and the network device is configured to implement the information indication method of any one of claims 14-24.

29. A communication device, comprising:
one or more processors;
wherein the one or more processors are used for calling instructions to cause the communication device to implement the information indication method of any one of claims 1-13 or the information indication method of any one of claims 14-24.

30. A storage medium, wherein the storage medium stores instructions, and when the instructions are executed by a communication device, the communication device is caused to implement the information indication method of any one of claims 1-13 or the information indication method of any one of claims 14-24.
